# EUROPÄISCHE PATENTANMELDUNG

(11) **EP 3 800 022 A1**
(43) Veröffentlichungstag der Anmeldung: **07.04.2021**
(21) Anmeldenummer: 20196968.0
(22) Anmeldetag: 18.09.2020
(51) Int. Cl.: B27N 3/02

(54) **VERFAHREN ZUR HERSTELLUNG EINES VERBUNDWERKSTOFFES**

(30) Priorität: 20.09.2019 DE 102019125358
(71) Anmelder: Gördes, Martin, 59846 Sundern (DE)
(72) Erfinder: Gördes, Martin, 59846 Sundern (DE)
(74) Vertreter: Basfeld, Rainer

(57) **Zusammenfassung**

Die Erfindung betrifft ein Verfahren zur Herstellung eines Verbundwerkstoffs (1), umfassend die folgenden Schritte:
- Zerkleinern von Holzelementen in Holzbruchstücke;
- Quetschen der Holzbruchstücke;
- Mischen der Holzbruchstücke mit einem Klebe- und/oder einem Bindemittel;
- Pressen der Mischung aus Holzbruchstücken und dem Klebe- und/oder Bindemittel.

## Beschreibung

Die vorliegende Erfindung betrifft ein Verfahren zur Herstellung eines Verbundwerkstoffs.

Aus dem Stand der Technik sind Verbundwerkstoffe mit Holz und einem Klebe- oder Bindemittel bekannt. Bei Spanplatten werden mehrere Lagen verpresster Frischholzspäne miteinander verbunden. Bei sogenannten Grobspanplatten, oder auch OSB-Platten (oriented strand board) werden etwas längere Späne aus Frischholz verwendet.

Die DE 10 2006 006 655 A1 offenbart ein Verfahren zur Herstellung eines Verbundwerkstoffs aus verschiedenen Holzbestandteilen und Klebemitteln.

Demgegenüber liegt der vorliegenden Erfindung die Aufgabe zugrunde, ein Verfahren zu schaffen, mit dem ein Verbundwerkstoff hergestellt werden kann, der nicht ausschließlich aus Frischholz besteht. Außerdem soll eine Vorrichtung zur Durchführung eines solchen Verfahrens und ein solcher Verbundwerkstoff geschaffen werden.

Diese Aufgabe wird durch ein Verfahren gemäß Anspruch 1, eine Vorrichtung gemäß Anspruch 9 und einen Verbundwerkstoff gemäß Anspruch 10 gelöst. Ausführungsformen der Erfindung sind in den abhängigen Ansprüchen angegeben.

Gemäß dem Verfahren nach Anspruch 1 werden Holzelemente zunächst in Holzbruchstücke zerkleinert. Die Zerkleinerung kann beispielsweise durch Zerbrechen erfolgen. Die Holzbruchstücke unterscheiden sich dabei beispielsweise von Holzspänen durch ihre Länge. Die Holzbruchstücke können beispielsweise eine Länge zwischen 5 Zentimetern und 2 Metern aufweisen.

Die Holzbruchstücke werden anschließend gequetscht. Das Quetschen kann beispielsweise erfolgen, indem die Holzbruchstücke zwischen zwei rotierenden Walzen hindurchgeführt werden. Das Quetschen unterscheidet sich beispielsweise von einem Pressvorgang dadurch, dass die Holzbruchstücke bewegt werden, während eine Kraft auf sie wirkt, die in etwa senkrecht zur Bewegungsrichtung gerichtet ist.

Die Holzbruchstücke werden außerdem mit einem Klebe- und/oder einem Bindemittel gemischt. Die Mischung wird dann gepresst. Während des Pressens kann die Mischung, beispielsweise auf eine Temperatur zwischen 190°C und 250°, erhitzt werden, sodass insbesondere Klebemittel verwendet werden können, deren Klebewirkung eine solch hohe Temperatur voraussetzt.

Je nach dem verwendeten Klebe- und/oder Bindemittel kann die Mischung auf die dementsprechend benötigte Temperatur gebracht werden.

Mit diesem Verfahren lässt sich ein Verbundwerkstoff herstellen, der überwiegend oder sogar komplett frei von Frischholz ist. Es kann also Holz verwendet werden, das für andere Verbundwerkstoffe, wie beispielsweise Spanplatten oder OSB-Platten, nicht verwendet wird.

Der Verbundwerkstoff kann beispielsweise in Form von Brettern, Kanthölzern, Dachlatten, Bauholz, in der Verpackungsindustrie oder in der Bauindustrie verwendet werden. In der Verpackungsindustrie kann der Verbundwerkstoff beispielsweise für Paletten, Kisten oder Unterlegehölzer verwendet werden.

Nach einer Ausführungsform der Erfindung können die Holzelemente Alt-, Recycling- und/oder Kalamitätsholz umfassen. Beispielsweise können die Holzelemente Holz umfassen, das durch Schädlinge wie den Borkenkäfer für andere Verwendungszwecke nicht oder nur schlecht geeignet ist. Auch Holz aus Sturmschäden kann verwendet werden. Der Verbundwerkstoff kann ausschließlich aus den in diesem Absatz erwähnten Holzarten bestehen oder aber auch einen Anteil an Frischholz umfassen.

Die Verwendung des Alt-, Recycling- und/oder Kalamitätsholz hat insbesondere eine Reduzierung des Kohlenstoffdioxid-Ausstoß zur Folge. Denn bei bekannten Werkstoffen wird frisches Holz verwendet, das nach dem Gebrauch thermisch entsorgt wird. Bei diesem Prozess wird Kohlenstoffdioxid freigesetzt. In Deutschland werden pro Jahr ca. 50 Millionen Kubikmeter Holz für Paletten, Kisten, Bauholz und ähnliche Zwecke verwendet. Dabei bindet ein Kubikmeter Holz ungefähr 1 Tonne Kohlenstoffdioxid. Wenn nur 10% dieser Menge durch den Verbundwerkstoff ersetzt würden, ließen sich alleine bei einmaliger Verwendung des Verbundwerkstoffs ungefähr 5 Millionen Tonnen Kohlenstoffdioxid einsparen. Da der Verbundwerkstoff jedoch mehrfach verwendet werden kann, liegt die tatsächliche Ersparnis vermutlich um ein Vielfaches höher.

Nach einer Ausführungsform der Erfindung können die Holzbruchstücke, vorzugsweise auf mindestens 56°C, erwärmt werden. Auf diese Weise kann eine besonders gute Verbindung der Holzbruchstücke mit dem Klebe- und/oder Bindemittel erreicht werden.

Nach einer Ausführungsform der Erfindung können die Holzbruchstücke für mindestens 30 Minuten erwärmt werden. Auch dies verbessert die Verbindung der Holzbruchstücke mit dem Klebe- und/oder Bindemittel.

Durch eine Erwärmung für mindestens 30 Minuten auf mindestens 56°C können die Anforderungen an Exporthölzer durch die ISPM IPCC Behandlung erfüllt werden.

Nach einer Ausführungsform der Erfindung können die Holzbruchstücke nach dem Quetschen zersplittert sein. So können sich die Holzbruchstücke miteinander verzahnen. Somit kann eine sehr hohe Festigkeit des Verbundwerkstoffs erreicht werden.

Unter den zersplitterten Holzbruchstücken wird im Rahmen dieser Beschreibung insbesondere verstanden, dass die Holzbruchstücke jeweils auseinandergebrochen oder zersplissen sind, um eine Verzahnung erreichen zu können.

Nach einer Ausführungsform können sich die zersplitterten Endbereiche beim Mischen ineinander verzahnen. Hierunter wird im Rahmen dieser Beschreibung insbesondere verstanden, dass sich die zersplitterten Endbereiche unterschiedlicher Holzbruchstücke miteinander verzahnen können. Dies erhöht insbesondere die Festigkeit des Verbundwerkstoffs.

Nach einer Ausführungsform der Erfindung können die Holzbruchstücke vor dem Quetschen jeweils länger als 5 Zentimeter sein. Es ist insbesondere möglich, dass der Verbundwerkstoff frei von kleineren Holzbruchstücken ist. Vorzugsweise weisen die Holzbruchstücke eine Länge von weniger als 2 Metern auf. Besonders bevorzugt sind Holzbruchstücke mit einer Länge zwischen 5 und 70 Zentimetern, insbesondere zwischen 10 und 50 Zentimetern.

Nach einer Ausführungsform der Erfindung kann die Mischung beim Pressen in eine Schnittholzform gebracht werden. Dabei kann es sich insbesondere um die Form von Schnittholzen gemäß DIN 68252 oder DIN 4074 handeln. Insbesondere kann die Mischung in eine Kantholz-, Bohlen-, Brett- oder Lattenform gebracht werden. Beispielsweise kann die Mischung nach dem Pressen eine Dicke von zumindest 8 und höchstens 40 Millimetern aufweisen. Die Breite kann dabei mehr als 80 Millimeter betragen. Alternativ dazu kann die Mischung nach dem Pressen eine Dicke von mehr als 40 Millimetern aufweisen. Dabei kann die Breite weniger als das Dreifache der Dicke betragen.

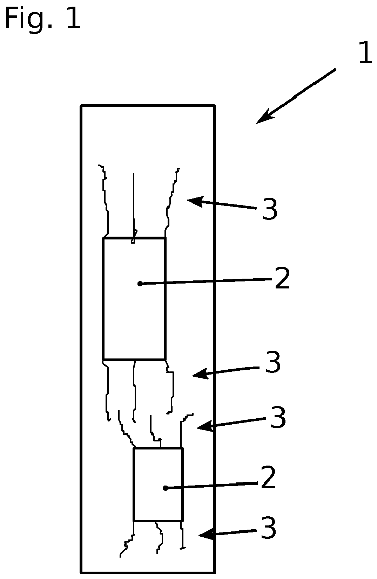

Weitere Merkmale und Vorteile der vorliegenden Erfindung werden deutlich anhand der nachfolgenden Beschreibung eines bevorzugten Ausführungsbeispiels unter Bezugnahme auf die beiliegende Abbildung. Dabei werden für gleiche oder ähnliche Bauteile und für Bauteile mit gleichen oder ähnlichen Funktionen dieselben Bezugszeichen verwendet. Darin zeigt
- Fig. 1: eine schematische Draufsicht auf einen Verbundwerkstoff, der gemäß einem Verfahren nach einer Ausführungsform der Erfindung hergestellt wurde.

Der Verbundwerkstoff 1 umfasst mehrere Holzbruchstücke, die jeweils aus einem Mittelbereich 2 und zwei Endbereichen 3 bestehen. In den Endbereichen 3 sind die Holzbruchstücke jeweils zersplittert, sodass die Endbereiche 3 benachbarter Holzbruchstücke miteinander verzahnt sind. In Figur 1 sind aus Gründen der Übersichtlichkeit lediglich zwei Holzbruchstücke dargestellt. In der Realität ist die Anzahl der Holzbruchstücke um ein Vielfaches größer.

Der Verbundwerkstoff 1 wurde hergestellt, indem zunächst Holzbruchstücke aus Alt-, Recycling- und/oder Kalamitätsholz hergestellt wurden. Die Holzbruchstücke wurden gequetscht, sodass sie in den Endbereichen 3 gesplittert sind. Außerdem wurden die Holzbruchstücke erwärmt und mit einem Klebe- und/oder Bindemittel gemischt. Die Mischung wurde anschließend in eine Schnittholzform gepresst.

Durch die Verwendung von ausschließlich oder überwiegend Alt-, Recycling- und/oder Kalamitätsholz kann die Verwendung von Frischholz reduziert oder sogar vermieden werden, sodass die Umwelt geschont wird. Insbesondere bei, wie durch den Klimawandel zu erwartenden, länger anhaltenden Trockenperioden kann die Verwendung von Frischholz problematisch werden, wenn beispielsweise nicht mehr genügend Frischholz zur Verfügung steht. Außerdem steigt die Menge an Kalamitätsholz durch Schädlinge wie den Borkenkäfer, sodass der Verbundwerkstoff kostengünstig hergestellt werden kann.

## Patentansprüche

1. Verfahren zur Herstellung eines Verbundwerkstoffs (1), umfassend die folgenden Schritte:
- Zerkleinern von Holzelementen in Holzbruchstücke;
- Quetschen der Holzbruchstücke;
- Mischen der Holzbruchstücke mit einem Klebe- und/oder einem Bindemittel;
- Pressen der Mischung aus Holzbruchstücken und dem Klebe- und/oder Bindemittel.

2. Verfahren nach Anspruch 1, **dadurch gekennzeichnet, dass** die Holzelemente Alt-, Recycling- und/oder Kalamitätsholz umfassen.

3. Verfahren nach einem der vorherigen Ansprüche, **dadurch gekennzeichnet, dass** die Holzbruchstücke, vorzugszweise auf mindestens 56°C, erwärmt werden.

4. Verfahren nach einem der vorherigen Ansprüche, **dadurch gekennzeichnet, dass** die Holbruchstücke für mindestens 30 Minuten erwärmt werden.

5. Verfahren nach einem der vorherigen Ansprüche, **dadurch gekennzeichnet, dass** nach dem Quetschen die Holzbruchstücke zersplittert sind.

6. Verfahren nach dem vorherigen Anspruch, **dadurch gekennzeichnet, dass** sich die zersplitterten Endbereiche (3) beim Mischen ineinander verzahnen.

7. Verfahren nach einem der vorherigen Ansprüche, **dadurch gekennzeichnet, dass** die Holzbruchstücke vor dem Quetschen jeweils länger als 5 Zentimeter sind.

8. Verfahren nach einem der vorherigen Ansprüche, **dadurch gekennzeichnet, dass** die Mischung beim Pressen in eine Schnittholzform gebracht werden.

9. Vorrichtung zur Durchführung eines Verfahrens nach einem der vorherigen Ansprüche.

10. Verbundwerkstoff, gefertigt mit einem Verfahren nach einem der Ansprüche 1 bis 8, **dadurch gekennzeichnet, dass** der Verbundwerkstoff eine Schnittholzform aufweist.
